# EUROPÄISCHE PATENTSCHRIFT

(11) **EP 3 671 527 B1**
(45) Veröffentlichungstag und Bekanntmachung des Hinweises auf die Patenterteilung: **12.07.2023**
(21) Anmeldenummer: 19204975.7
(22) Anmeldetag: 24.10.2019
(51) Int. Cl.: G06K 7/00, B60C 23/04, H01M 10/00, H01Q 1/22, H02J 7/00, G06K 19/07

(54) **AKTIVER RFID-TRANSPONDER**
ACTIVE RFID TRANSPONDER
TRANSPONDEUR RFID ACTIF

(30) Priorität: 20.12.2018 DE 102018222382
(43) Veröffentlichungstag der Anmeldung: 24.06.2020
(73) Patentinhaber: Continental Reifen Deutschland GmbH, 30165 Hannover (DE)
(72) Erfinder: Finger, Sebastian, 30419 Hannover (DE); Nawrocka-Herczynska, Monika, 30419 Hannover (DE); Kurz, Martin, 30419 Hannover (DE); Ehmke, Tobias, 30419 Hannover (DE)
(74) Vertreter: Continental Corporation

(56) Entgegenhaltungen:
- DE-A1- 10 156 073
- DE-A1- 10 200 035
- US-A1- 2012 009 491
- US-A1- 2012 235 644
- US-A1- 2014 272 458
- US-A1- 2016 351 944
- US-A1- 2017 277 992

## Beschreibung

Die vorliegende Erfindung betrifft einen aktiven RFID-Transponder, umfassend einen Mikrochip sowie eine erste Antenne und eine zweite Antenne, die mit dem Mikrochip signalverbunden sind, wobei der Mikrochip, die erste Antenne und die zweite Antenne in einer Kautschukmatrix eingebettet sind, wobei die Kautschukmatrix mit einer ionischen Flüssigkeit gefüllt ist, und wobei die erste Antenne und die zweite Antenne unterschiedliche Metalle umfassen, um so ein Elektrodenpotential zwischen der ersten Antenne und der zweiten Antenne bereitzustellen. Die vorliegende Erfindung betrifft ferner ein elastomeres Produkt, welches den erfindungsgemäßen aktiven RFID-Transponder umfasst, sowie die Verwendung des erfindungsgemäßen aktiven RFID-Transponders in einem elastomeren Produkt.

Sender-Empfänger-Systeme zum automatischen und berührungslosen Identifizieren und Lokalisieren von Objekten und Lebewesen mit Radiowellen sind seit Langem bekannt. Diese Technologie wird auch als RFID (*"radio-frequency identification"*) bezeichnet. Ein RFID-System besteht grundsätzlich aus einem Transponder (auch *"Funketikett"* bzw. *"Tag"* genannt), welcher an dem Objekt oder Lebewesen angebracht ist, sowie einem Lesegerät (auch *"Reader"* genannt) zum Auslesen der auf dem Transponder hinterlegten Daten.

Die Übertragung der Information erfolgt üblicherweise, indem das Lesegerät ein hochfrequentes elektromagnetisches Wechselfeld erzeugt, dem der Transponder ausgesetzt wird. Der Mikrochip im Transponder decodiert die vom Lesegerät gesendeten Befehle. Die Antwort codiert und moduliert der Transponder in das eingestrahlte elektromagnetische Feld durch Feldschwächung im kontaktfreien Kurzschluss oder gegenphasige Reflexion des vom Lesegerät ausgesendeten Feldes. Damit überträgt der Transponder die vom Lesegerät abgefragte Information.

Man unterscheidet zwischen vier verschiedenen Typen von RFID- Transpondern (vgl. "Technikleitfaden für RFID-Projekte", Willibald A. Günthner, RFID-Anwenderzentrum der TU München). Transponder der Klasse 1 sind passive Transponder (d.h. sie weisen keine eigene Energiequelle auf) mit minimalem Funktionsumfang. Transponder dieses Typs dienen hauptsächlich der reinen Identifikation eines Objekts mit Hilfe einer auf dem Mikrochip gespeicherten Seriennummer (auch als *"Unique Identifier"* oder *"UID"* bezeichnet). Transponder der Klasse 2 sind ebenfalls passive Transponder, weisen aber einen erweiterten Funktionsumfang auf, beispielsweise einen erweiterten Nutzspeicher oder eine Zugriffskontrolle. Transponder der Klasse 3 sind aktive Transponder (d.h. sie weisen eine eigene Energiequelle auf), die Sensor-Funktionen übernehmen können. Transponder der Klasse 4 sind ebenfalls aktive Transponder, die einen eigenen Sender besitzen.

Der Vorteil passiver RFID-Transponder liegt insbesondere in deren geringer Größe sowie geringem Preis. Allerdings weisen passive RFID-Transponder grundsätzlich nur eine sehr begrenzte Reichweite auf. Aktive RFID-Transponder mit eigener Energieversorgung ermöglichen hingegen größere Reichweiten. Diese haben aufgrund der für die Energieversorgung notwendigen Batterie allerdings andere Nachteile. Insbesondere können aktive RFID-Transponder aufgrund der Größe und Steifheit der Batterie nicht in allen Bereichen eingesetzt werden, in denen passive RFID-Transponder zum Einsatz kommen können. Beispielsweise können herkömmliche aktive RFID-Transponder aufgrund ihrer Größe und fehlenden Flexibilität nicht ohne Weiteres in Gummiprodukte (beispielsweise in Reifen) integriert werden.

Die US 2017/0277992 A1, gegen die Anspruch 1 abgegrenzt ist, offenbart Label, welche RFID-Komponenten umfassen, und deren Einsatz in Verbindung mit Gummiprodukten, wobei die Label aus mehreren Lagen aufgebaut sind.

Batterien bzw. elektrochemische Zellen, die als Energieversorgung für aktive RFID- Transponder eingesetzt werden können, sind beispielsweise in der US 2012/0009491 A1 oder der US 2012/0235644 A1 offenbart.

Der vorliegenden Erfindung liegt daher die Aufgabe zugrunde, einen aktiven RFID-Transponder bereitzustellen, der kleiner und flexibler als herkömmliche aktive RFID-Transponder ausgestaltet werden kann, so dass dieser beispielsweise auch in Gummiprodukte integriert oder auf diese aufgebracht werden kann.

Diese Aufgabe wird durch die in den Ansprüchen definierte Erfindung gelöst.

Der erfindungsgemäße RFID-Transponder zeichnet sich dadurch aus, dass die beiden Antennen nicht nur zum Empfangen und/oder Senden elektromagnetischer Wellen, sondern gleichzeitig auch als Batterie dienen. Damit handelt es sich bei dem erfindungsgemäßen RFID-Transponder um einen aktiven RFID-Transponder, bei dem aber die Batterie platzsparend in bereits vorhandene andere Elemente des RFID-Transponders integriert ist. Darüber hinaus sind der Mikrochip sowie die beiden Antennen in einer Kautschukmatrix eingebettet. Dieses ermöglicht eine flexible Ausgestaltung des erfindungsgemäßen RFID-Transponders, was zahlreiche zusätzliche Anwendungsmöglichkeiten des erfindungsgemäßen aktiven RFID-Transponders im Vergleich zu herkömmlichen aktiven RFID-Transpondern erlaubt.

Der Mikrochip des erfindungsgemäßen RFID-Transponders kann jedweder geeignete Mikrochip für Anwendungen in der RFID-Technologie sein. Entsprechende Mikrochips sind im Stand der Technik bekannt (vgl. beispielsweise "Technikleitfaden für RFID-Projekte", Willibald A. Günthner, RFID-Anwenderzentrum der TU München). Vorzugsweise ist der Mikrochip hinreichend klein; beispielsweise hat dieser ein Volumen von weniger als 1 mm³, vorzugsweise von weniger als 0,5 mm³. Gemäß einer weiteren bevorzugten Ausführungsform kann der Mikrochip neben der Datenübertragung um weitere Funktionalitäten erweitert sein, beispielsweise um Sensorfunktionen und/oder Datenspeicherfunktionen.

Der erfindungsgemäße RFID-Transponder umfasst eine erste Antenne und eine zweite Antenne, die mit dem Mikrochip signalverbunden sind. Der erfindungsgemäße RFID-Transponder ist jedoch nicht auf zwei Antennen beschränkt, sondern kann gegebenenfalls weitere Antennen in geeigneter Weise umfassen. Wie bereits ausgeführt, dienen diese beiden Antennen nicht nur zum Empfangen und/oder Senden elektromagnetischer Wellen, sondern gleichzeitig auch als Batterie.

Die erste Antenne und die zweite Antenne umfassen unterschiedliche Metalle, um so ein Elektrodenpotential zwischen der ersten Antenne und der zweiten Antenne bereitzustellen. Auf diese Weise stellen die beiden Antennen die Kathode und Anode einer galvanischen Zelle dar. Gemäß einer bevorzugten Ausführungsform bestehen die erste Antenne und die zweite Antenne unabhängig voneinander aus den unterschiedlichen Metallen, sind mit diesen beschichtet oder sind mit diesen dotiert. Die erste Antenne kann also aus einem ersten Metall bestehen, d.h. aus diesem Metall hergestellt sein. Es ist aber ebenso möglich, dass die erste Antenne lediglich mit einem ersten Metall beschichtet oder dotiert ist. Dies hat den Vorteil, dass das Material des Kerns der ersten Antenne im Hinblick auf die Empfangs- und Sendefunktion der Antenne optimiert werden kann. Die zweite Antenne kann aus einem zweiten Metall bestehen, d.h. aus diesem Metall hergestellt sein. Dieses zweite Metall ist von dem ersten Metall der ersten Antenne verschieden. Es ist aber ebenso möglich, dass die zweite Antenne lediglich mit dem zweiten Metall beschichtet oder dotiert ist. Dies hat ebenfalls den Vorteil, dass das Material des Kerns der zweiten Antenne im Hinblick auf die Empfangs- und Sendefunktion der Antenne optimiert werden kann.

Die Metalle der ersten Antenne sowie der zweiten Antenne sind so zu wählen, dass ein Elektrodenpotential im Sinne eines elektrochemischen Potentials zwischen der ersten Antenne und der zweiten Antenne bereitgestellt wird. Entsprechende Metallpaare sind dem Fachmann von der elektrochemischen Spannungsreihe der Metalle bekannt. Gemäß einer bevorzugten Ausführungsform der vorliegenden Erfindung sind die Metalle der ersten Antenne und der zweiten Antenne aus der Gruppe, bestehend aus den Paaren Zink/Kupfer, Eisen/Kupfer, Zinn/Kupfer, Silicium/Kupfer, Zink/Mangan, Zink/Silber, Zinn/Silber, Silicium/Silber, Eisen/Silber, Zink/Gold, Eisen/Gold, Zinn/Gold, Silicium/Gold, Quecksilber/Zink und Lithium/Eisen, ausgewählt. Besonders bevorzugte Paare sind dabei Zink/Kupfer, Eisen/Kupfer, Zinn/Kupfer, Silicium/Kupfer, Zink/Mangan und Lithium/Eisen.

Der Fachmann kann die Paare in geeigneter Weise im Hinblick auf die erforderliche Potentialdifferenz für die jeweils vorgesehene Anwendung auswählen. Gemäß einer bevorzugten Ausführungsform der vorliegenden Erfindung beträgt die Differenz in dem Standardelektrodenpotential zwischen dem Metall der ersten Antenne und dem Metall der zweiten Antenne mindestens 0.4 V, vorzugsweise mindestens 1 V. Diese Differenz in dem Standardelektrodenpotential ist gemäß der vorliegenden Erfindung in Wasser bei 25°C mit einer H⁺-Aktivität = 1 zu bestimmen.

Der Mikrochip, die erste Antenne und die zweite Antenne des erfindungsgemäßen RFID-Transponders sind in einer Kautschukmatrix eingebettet. Diese Einbettung kann vollständig sein, so dass der Mikrochip, die erste Antenne und die zweite Antenne vollständig von der Kautschukmatrix umgeben sind. Es ist aber auch möglich, dass nur eine teilweise Einbettung vorliegt. So können beispielsweise die erste Antenne und/oder die zweite Antenne auch auf die Kautschukmatrix aufgedruckt sein. Gemäß einer besonders bevorzugten Ausführungsform ist der Mikrochip vollständig in die Kautschukmatrix eingebettet, während die erste Antenne und die zweite Antenne auf die Kautschukmatrix aufgedruckt sind.

Bei der Kautschukmatrix handelt es sich um eine Matrix bzw. einen Träger auf Kautschukbasis. Unter Kautschuk wird im Rahmen der vorliegenden Erfindung sowohl ein unvulkanisierter Kautschuk bzw. eine unvulkanisierte Kautschukmischung als auch ein vulkanisierter Kautschuk bzw. eine vulkanisierte Kautschukmischung verstanden. Gemäß einer bevorzugten Ausführungsform handelt es sich bei der Kautschukmatrix um eine vulkanisierte Kautschukmatrix.

Erfindungsgemäß kann die Kautschukmatrix auf jedwedem geeigneten Kautschuk basieren. Gemäß einer bevorzugten Ausführungsform der vorliegenden Erfindung basiert die Kautschukmatrix auf mindestens einem Elastomer, welches vorzugsweise aus der Gruppe, bestehend aus Acrylnitril-Butadien-Kautschuk (NBR), Carboxylgruppen-haltigem Nitril-Kautschuk (XNBR), Ethylen-Vinylacetat-Copolymer (EVAC), Ethylen-Vinylacetat-Kautschuk (EVM), hydriertem Acrylnitril-Butadien-Kautschuk (HNBR), Perfluorkautschuk (FFKM), Ethylen-Acrylat-Kautschuk (AEM), Polyacrylat-Kautschuk (ACM), Chlorpolyethylen-Kautschuk (CM), Chlorsulphonyl-Polyethylen-Kautschuk (CSM), Ethylen-Propylen-Dien-Kautschuk (EPDM), Ethylen-Propylen-Kautschuk (EPM), Fluor-Kautschuk (FKM), Epichlorhydrin-Kautschuk (CO), Epichlorhydrin-Copolymer-Kautschuk (ECO), Epichlorhydrin-Terpolymer (GECO), Polydimethylsiloxan (PDMS), Propylenoxid-Copolymer-Kautschuk (GPO), Butadien-Kautschuk (BR), Chloropren-Kautschuk (CR), Isobuten-Isopren-Kautschuk (IIR), Brombutyl-Kautschuk (BIIR), Chlorbutyl-Kautschuk (CIIR), Isopren-Kautschuk (IR), Natur-Kautschuk (NR), StyrolButadien-Kautschuk (SBR), Fluor-Silicon-Kautschuk (FVMQ), Methyl-Phenyl-Silicon-Kautschuk (PMQ), Methyl-Phenyl-Vinyl-Silicon-Kautschuk (PVMQ), Methyl-Silicon-Kautschuk (MQ), Methyl-Vinyl-Silicon-Kautschuk (VMQ), Polyester-Urethanen (AU), Polyether-Urethanen (EU) und Kombinationen davon, ausgewählt ist. Insbesondere können auch Blends aus zwei oder mehr der vorstehend genannten Elastomere zum Einsatz kommen.

Die Kautschukmatrix ist mit einer ionischen Flüssigkeit gefüllt. Diese Füllung mit einer ionischen Flüssigkeit ermöglicht einen Ladungstransport innerhalb der Kautschukmatrix, so dass diese als Elektrolyt für die galvanische Zelle dienen kann. Als ionische Flüssigkeit kann jedwede geeignete ionische Flüssigkeit verwendet werden. Vorzugsweise ist das Kation der ionischen Flüssigkeit aus der Gruppe, bestehend aus Alkalimetallionen, Erdalkalimetallionen, Imidazolium, Vinylimidazolium, Pyridinium, Pyrrolidinium, Guanidinium, Piperidinium, Morpholinium, Ammonium, Phosphonium und Kombinationen davon, ausgewählt, und das Anion der ionischen Flüssigkeit ist aus der Gruppe, bestehend aus Halogeniden, Perchlorat, Tetrafluorborat, Trifluoracetat, Hexafluorophosphat, Phosphinaten, Tosylat, Triflat, Bis(trifluormethansulfonyl)amid, Bis(fluorsulfonyl)imid, Bis(trifluormethansulfonyl)imid (TFSI), Dicyanamid, Tris(pentafluorethyl)trifluorphosphat, Dimethylsulfat, Difluor(oxalato)borat (DFOB), Bis(oxalato)borat (BOB), Trifluormethansulfonat und Kombinationen davon, ausgewählt.

Die ionische Flüssigkeit kann in jedweder geeigneten Menge in der Kautschukmatrix enthalten sein. Vorzugsweise ist die ionische Flüssigkeit in einer Menge von 5 bis 120 phr, besonders bevorzugt in einer Menge von 10 bis 80 phr und ganz besonders bevorzugt in einer Menge von 15 bis 60 phr in der Kautschukmatrix enthalten.

Gemäß einer bevorzugten Ausführungsform der vorliegenden Erfindung ist die erste Elektrode mit einer zusätzlichen Polymerhülle ummantelt, welche das Metall der ersten Elektrode in Salzform enthält, und/oder die zweite Elektrode ist mit einer zusätzlichen Polymerhülle ummantelt, welche das Metall der zweiten Elektrode in Salzform enthält. Die beiden Elektroden können also unabhängig voneinander mit einer zusätzlichen Polymerhülle ummantelt sein, in der das Metall der jeweiligen Antenne als Salz vorliegt. Das Metall bildet in diesem Fall zusammen mit Ummantelung und dem darin enthaltenen Salz die jeweilige Elektrode. Diese räumliche Trennung der Gegenionen ermöglicht es, die Potentialdifferenz zwischen Kathode und Anode über einen längeren Zeitraum aufrechtzuerhalten und somit die Funktion des erfindungsgemäßen RFID-Transponders über einen längeren Zeitraum zu gewährleisten.

Dabei ist es bevorzugt, dass sowohl die erste als auch die zweite Elektrode jeweils mit einer zusätzlichen Polymerhülle ummantelt ist, wobei die Polymerhüllen aus dem gleichen Polymer oder aus verschiedenen Polymeren bestehen können, und wobei es sich bei diesen Polymeren um Elastomere handelt. Geeignete Elastomere sind wiederum die vorstehend in Bezug auf die Kautschukmatrix genannten Elastomere.

Der erfindungsgemäße RFID-Transponder ist vorzugsweise flexibel. Als flexibel wird der RFID-Transponder im Rahmen der vorliegenden Erfindung verstanden, wenn die Kautschukmatrix (ohne Chip und Antennen) eine verbleibende Verformung von höchstens 50% nach 100% Dehnung (nach ASTM D1566-98) aufweist. Eine Flexibilität ermöglicht die Verwendung des erfindungsgemäßen RFID-Transponders in zahlreichen technischen Anwendungen, insbesondere in Verbindung mit elastomeren Produkten bzw. Bauteilen.

Die vorliegende Erfindung betrifft weiterhin ein elastomeres Produkt, welches den erfindungsgemäßen aktiven RFID-Transponder umfasst. Vorzugsweise handelt es sich bei diesem elastomeren Produkt um einen Reifen, eine Schuhsohle, einen Schlauch oder einen Antriebsriemen. Die vorliegende Erfindung betrifft weiterhin die Verwendung des erfindungsgemäßen RFID-Transponders in einem solchen elastomeren Produkt.

Die erfindungsgemäßen RFID-Transponder können in elastomere Produkte integriert werden, was die Verwendung von aktiven RFID-Transpondern in Gummiprodukten ermöglicht. Auf diese Weise kann die RFID-Technologie auch bei derartigen Produkten eingesetzt werden, beispielsweise zur Kennzeichnung von Reifen, Schuhsohlen, Schläuchen oder Antriebsriemen. Die vorliegende Erfindung stellt einen aktiven RFID-Transponder bereit, der kleiner und flexibler als herkömmliche aktive RFID-Transponder ausgestaltet werden kann, so dass dieser auch beispielsweise in Gummiprodukte integriert oder auf diese aufgebracht werden kann.

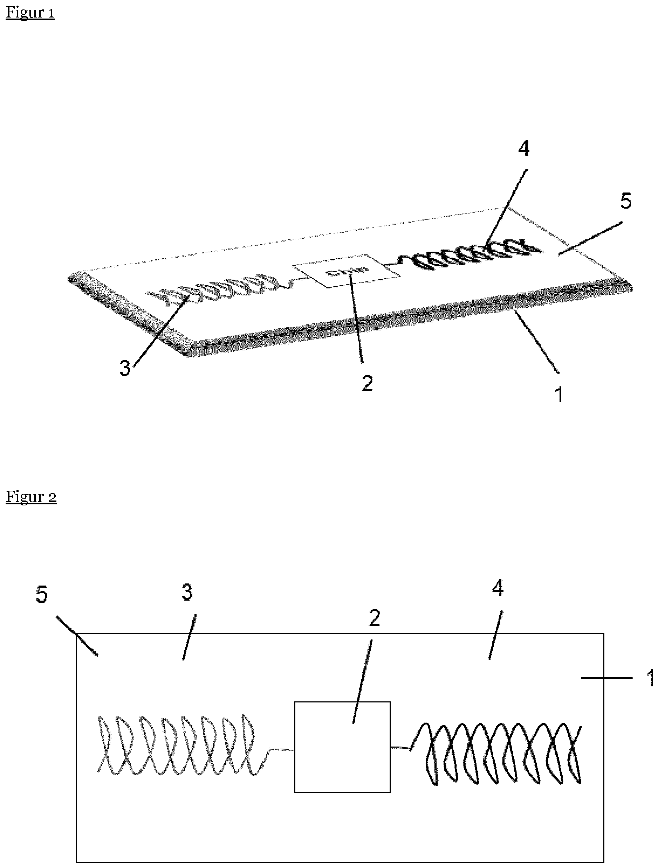

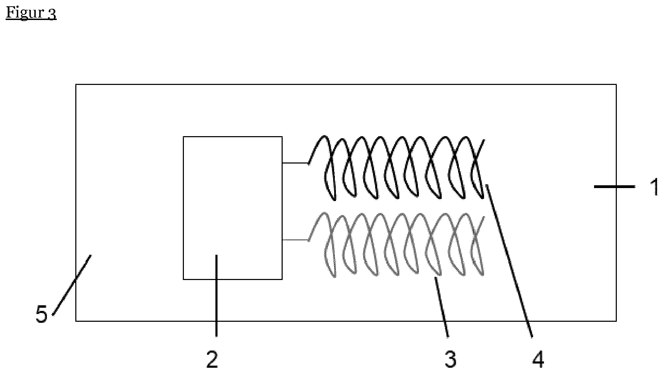

Die vorliegende Erfindung wird nachfolgend in Bezug auf Figuren 1 bis 3 näher erläutert. Wie in Figur 1 dargestellt, umfasst der erfindungsgemäße aktive RFID-Transponder 1 einen Mikrochip 2 sowie eine erste Antenne 3 und eine zweite Antenne 4, die in einer Kautschukmatrix 5 eingebettet sind, wobei die erste Antenne 3 und die zweite Antenne 4 optional jeweils mit einer Polymerhülle ummantelt sein können, welche das Kation des jeweiligen metallischen Antennenmaterials umfasst. Die Figuren 2 und 3 stellen zwei mögliche Anordnungen der ersten und zweiten Antenne dar.

### Bezugszeichenliste

- 1: Aktiver RFID-Transponder
- 2: Mikrochip
- 3: Erste Antenne
- 4: Zweite Antenne
- 5: Kautschukmatrix

## Patentansprüche

1. Aktiver RFID-Transponder (1), umfassend einen Mikrochip (2) sowie eine erste Antenne (3) und eine zweite Antenne (4), die mit dem Mikrochip (2) signalverbunden sind,
wobei der Mikrochip (2), die erste Antenne (3) und die zweite Antenne (4) in einer Kautschukmatrix (5) eingebettet sind, und
wobei die erste Antenne (3) und die zweite Antenne (4) zum Empfangen und/oder Senden elektromagnetischer Wellen dienen,
**dadurch gekennzeichnet, dass** die Kautschukmatrix (5) mit einer ionischen Flüssigkeit gefüllt ist, und
dass die erste Antenne (3) und die zweite Antenne (4) unterschiedliche Metalle umfassen, um so ein Elektrodenpotential zwischen der ersten Antenne (3) und der zweiten Antenne (4) bereitzustellen.

2. Aktiver RFID-Transponder (1) nach Anspruch 1, wobei die erste Antenne (3) und die zweite Antenne (4) unabhängig voneinander aus den unterschiedlichen Metallen bestehen, mit diesen beschichtet sind oder mit diesen dotiert sind.

3. Aktiver RFID-Transponder (1) nach Anspruch 1 oder 2, wobei die Metalle der ersten Antenne (3) und der zweiten Antenne (4) aus der Gruppe bestehend aus den Paaren Zink/Kupfer, Eisen/Kupfer, Zinn/Kupfer, Silicium/Kupfer, Zink/Mangan, Zink/Silber, Zinn/Silber, Silicium/Silber, Eisen/Silber, Zink/Gold, Eisen/Gold, Zinn/Gold, Silicium/Gold, Quecksilber/Zink und Lithium/Eisen, ausgewählt sind.

4. Aktiver RFID-Transponder (1) nach einem der Ansprüche 1 bis 3, wobei die Differenz in dem Standardelektrodenpotential zwischen dem Metall der ersten Antenne (3) und dem Metall der zweiten Antenne (4) mindestens 0.4 V, wobei das Standardelektrodenpotential als das Elektrodenpotential in Wasser bei 25°C mit einer H⁺-Aktivität = 1 definiert ist.

5. Aktiver RFID-Transponder (1) nach einem der Ansprüche 1 bis 4, wobei die Kautschukmatrix (5) auf mindestens einem Elastomer basiert, welches aus der Gruppe bestehend aus Acrylnitril-Butadien-Kautschuk (NBR), Carboxylgruppen-haltigem Nitril-Kautschuk (XNBR), Ethylen-Vinylacetat-Copolymer (EVAC), Ethylen-Vinylacetat-Kautschuk (EVM), hydriertem Acrylnitril-Butadien-Kautschuk (HNBR), Perfluorkautschuk (FFKM), Ethylen-Acrylat-Kautschuk (AEM), Polyacrylat-Kautschuk (ACM), Chlorpolyethylen-Kautschuk (CM), Chlorsulphonyl-Polyethylen-Kautschuk (CSM), Ethylen-Propylen-Dien-Kautschuk (EPDM), Ethylen-Propylen-Kautschuk (EPM), Fluor-Kautschuk (FKM), Epichlorhydrin-Kautschuk (CO), Epichlorhydrin-Copolymer-Kautschuk (ECO), Epichlorhydrin-Terpolymer (GECO), Polydimethylsiloxan (PDMS), Propylenoxid-Copolymer-Kautschuk (GPO), Butadien-Kautschuk (BR), Chloropren-Kautschuk (CR), Isobuten-Isopren-Kautschuk (IIR), Brombutyl-Kautschuk (BIIR), Chlorbutyl-Kautschuk (CIIR), Isopren-Kautschuk (IR), Natur-Kautschuk (NR), StyrolButadien-Kautschuk (SBR), Fluor-Silicon-Kautschuk (FVMQ), Methyl-Phenyl-Silicon-Kautschuk (PMQ), Methyl-Phenyl-Vinyl-Silicon-Kautschuk (PVMQ), Methyl-Silicon-Kautschuk (MQ), Methyl-Vinyl-Silicon-Kautschuk (VMQ), Polyester-Urethanen (AU), Polyether-Urethanen (EU) und Kombinationen davon, ausgewählt ist.

6. Aktiver RFID-Transponder (1) nach einem der Ansprüche 1 bis 5, wobei das Kation der ionischen Flüssigkeit aus der Gruppe bestehend aus Alkalimetallionen, Erdalkalimetallionen, Imidazolium, Vinylimidazolium, Pyridinium, Pyrrolidinium, Guanidinium, Piperidinium, Morpholinium, Ammonium, Phosphonium und Kombinationen davon, ausgewählt ist, und wobei das Anion der ionischen Flüssigkeit aus der Gruppe, bestehend aus Halogeniden, Perchlorat, Tetrafluorborat, Trifluoracetat, Hexafluorophosphat, Phosphinaten, Tosylat, Triflat, Bis(trifluormethansulfonyl)amid, Bis(fluorsulfonyl)imid, Bis(trifluormethansulfonyl)imid (TFSI), Dicyanamid, Tris(pentafluorethyl)trifluorphosphat, Dimethylsulfat, Difluor(oxalato)borat (DFOB), Bis(oxalato)borat (BOB), Trifluormethansulfonat und Kombinationen davon, ausgewählt ist.

7. Aktiver RFID-Transponder (1) nach einem der Ansprüche 1 bis 6, wobei die erste Elektrode mit einer zusätzlichen Polymerhülle ummantelt ist, welche das Metall der ersten Elektrode in Salzform enthält, und/oder wobei die zweite Elektrode mit einer zusätzlichen Polymerhülle ummantelt ist, welche das Metall der zweiten Elektrode in Salzform enthält.

8. Aktiver RFID-Transponder (1) nach Anspruch 7, wobei die erste und die zweite Elektrode jeweils mit einer zusätzlichen Polymerhülle ummantelt ist, wobei die Polymerhüllen aus dem gleichen Polymer oder aus verschiedenen Polymeren bestehen können, und wobei es sich bei diesen Polymeren um Elastomere handelt.

9. Aktiver RFID-Transponder (1) nach einem der Ansprüche 1 bis 8, welcher flexibel ist, wobei der RFID-Transponder (1) flexibel ist, wenn die Kautschukmatrix (5) eine verbleibende Verformung von höchstens 50% nach 100% Dehnung aufweist.

10. Elastomeres Produkt, umfassend den aktiven RFID-Transponder (1) nach einem der Ansprüche 1 bis 9.

11. Elastomeres Produkt nach Anspruch 10, welches ein Reifen, eine Schuhsohle, ein Schlauch oder ein Antriebsriemen ist.

12. Verwendung des aktiven RFID-Transponders (1) nach einem der Ansprüche 1 bis 9 in einem elastomeren Produkt.

## Claims

1. Active RFID transponder (1) comprising a microchip (2) and a first antenna (3) and a second antenna (4) which are in signal communication with the microchip (2),
wherein the microchip (2), the first antenna (3) and the second antenna (4) are embedded in a rubber matrix (5) and
wherein the first antenna (3) and the second antenna (4) are used to receive and/or send electromagnetic waves,
**characterized in that** the rubber matrix (5) is filled with an ionic liquid and
**in that** the first antenna (3) and the second antenna (4) comprise different metals in order thus to provide an electric potential between the first antenna (3) and the second antenna (4).

2. Active RFID transponder (1) according to Claim 1, wherein the first antenna (3) and the second antenna (4) independently of one another are made of different metals are coated therewith or are doped therewith.

3. Active RFID transponder (1) according to Claim 1 or 2, wherein the metals of the first antenna (3) and the second antenna (4) are selected from the group consisting of the pairs zinc/copper, iron/copper, tin/copper, silicon/copper, zinc/manganese, zinc/silver, tin/silver, silicon/silver, iron/silver, zinc/gold, iron/gold, tin/gold, silicon/gold, mercury/zinc and lithium/iron.

4. Active RFID transponder (1) according to any of Claims 1 to 3, wherein the difference in the standard electrode potential between the metal of the first antenna (3) and the metal of the second antenna (4) is at least 0.4 V, wherein the standard electrode potential is defined as the electric potential in water at 25°C with an H⁺ activity = 1.

5. Active RFID transponder (1) according to any of claims 1 to 4, wherein the rubber matrix (5) is based on at least one elastomer selected from the group consisting of acrylonitrile-butadiene rubber (NBR), carboxyl-containing nitrile rubber (XNBR), ethylene-vinyl acetate copolymer (EVAC), ethylene-vinyl acetate rubber (EVM), hydrogenated acrylonitrile-butadiene rubber (HNBR), perfluoro rubber (FFKM), ethylene-acrylate rubber (AEM), polyacrylate rubber (ACM), chloropolyethylene rubber (CM), chlorosulphonyl-polyethylene rubber (CSM), ethylene-propylene-diene rubber (EPDM), ethylene-propylene rubber (EPM), fluoro rubber (FKM), epichlorohydrin rubber (CO), epichlorohydrin copolymer rubber (ECO), epichlorohydrin terpolymer (GECO), polydimethylsiloxane (PDMS), propylene oxide copolymer rubber (GPO), butadiene rubber (BR), chloroprene rubber (CR), isobutene-isoprene rubber (IIR), bromobutyl rubber (BIIR), chlorobutyl rubber (CIIR), isoprene rubber (IR), natural rubber (NR), styrenebutadiene rubber (SBR), fluorine-silicone rubber (FVMQ), methyl phenyl silicone rubber (PMQ), methyl phenyl vinyl silicone rubber (PVMQ), methyl silicone rubber (MQ), methyl vinyl silicone rubber (VMQ), polyester urethanes (AU), polyether urethanes (EU) and combinations thereof.

6. Active RFID transponder (1) according to any of Claims 1 to 5, wherein the cation of the ionic liquid is selected from the group consisting of alkali metal ions, alkaline earth metal ions, imidazolium, vinylimidazolium, pyridinium, pyrrolidinium, guanidinium, piperidinium, morpholinium, ammonium, phosphonium, and combinations thereof and wherein the anion of the ionic liquid is selected from the group consisting of halides, perchlorate, tetrafluoroborate, trifluoroacetate, hexafluorophosphate, phosphinates, tosylate, triflate, bis(trifluoromethanesulfonyl)amide, bis(fluorosulfonyl)imide, bis(trifluoromethanesulfonyl)imide (TFSI), dicyanamide, tris(pentafluoroethyl)trifluorophosphate, dimethylsulfate, difluoro(oxalato)borate (DFOB), bis(oxalato)borate (BOB), trifluoromethanesulfonate.

7. Active RFID transponder (1) according to any of Claims 1 to 6, wherein the first electrode is sheathed with an additional polymer sleeve which contains the metal of the first electrode in salt form and/or wherein the second electrode is sheathed with an additional polymer sleeve which contains the metal of the second electrode in salt form.

8. Active RFID transponder (1) according to Claim 7, wherein the first and the second electrode are each sheathed with an additional polymer sleeve, wherein the polymer sheathes may be made of the same polymer or of different polymers and wherein these polymers are elastomers.

9. Active RFID transponder (1) according to any of Claims 1 to 8 which is flexible, wherein the RFID transponder (1) is flexible when the rubber matrix (5) has a residual set of not more than 50% after 100% extension.

10. Elastomeric product comprising the active RFID transponder (1) according to any of Claims 1 to 9.

11. Elastomeric product according to Claim 10 which is a tire, a shoe sole, a hose or a drive belt.

12. Use of the active RFID transponder (1) according to any of Claims 1 to 9 in in an elastomeric product.

## Revendications

1. Transpondeur RFID actif (1), comprenant une micropuce (2) ainsi qu'une première antenne (3) et une deuxième antenne (4), qui sont reliées par des signaux à la micropuce (2),
la micropuce (2), la première antenne (3) et la deuxième antenne (4) étant incorporées dans une matrice de caoutchouc (5), et
la première antenne (3) et la deuxième antenne (4) servant à la réception et/ou à l'envoi d'ondes électromagnétiques,
**caractérisé en ce que** la matrice de caoutchouc (5) est remplie avec un liquide ionique, et
**en ce que** la première antenne (3) et la deuxième antenne (4) comprennent des métaux différents, pour ainsi créer un potentiel d'électrodes entre la première antenne (3) et la deuxième antenne (4).

2. Transpondeur RFID actif (1) selon la revendication 1, la première antenne (3) et la deuxième antenne (4) étant indépendamment l'une de l'autre constituées des métaux différents, étant revêtues par ceux-ci ou étant dopées par ceux-ci.

3. Transpondeur RFID actif (1) selon la revendication 1 ou 2, les métaux de la première antenne (3) et de la deuxième antenne (4) étant choisis dans le groupe constitué par les paires zinc/cuivre, fer/cuivre, étain/cuivre, silicium/cuivre, zinc/manganèse, zinc/argent, étain/argent, silicium/argent, fer/argent, zinc/or, fer/or, étain/or, silicium/or, mercure/zinc et lithium/fer.

4. Transpondeur RFID actif (1) selon l'une quelconque des revendications 1 à 3, la différence du potentiel d'électrodes standard entre le métal de la première antenne (3) et le métal de la deuxième antenne (4) étant d'au moins 0,4 V, le potentiel d'électrodes standard étant défini comme le potentiel d'électrodes dans l'eau à 25 °C avec une activité de H⁺ = 1.

5. Transpondeur RFID actif (1) selon l'une quelconque des revendications 1 à 4, la matrice de caoutchouc (5) étant à base d'au moins un élastomère qui est choisi dans le groupe constitué par un caoutchouc acrylonitrile-butadiène (NBR), un caoutchouc nitrile contenant des groupes carboxyle (XNBR), un copolymère éthylène-acétate de vinyle (EVAC), un caoutchouc d'éthylène-acétate de vinyle (EVM), un caoutchouc d'acrylonitrile-butadiène hydrogéné (HNBR), un caoutchouc perfluoré (FFKM), un caoutchouc d'éthylène-acrylate (AEM), un caoutchouc de polyacrylate (ACM), un caoutchouc de chloropolyéthylène (CM), un caoutchouc de chlorosulfonyl-polyéthylène (CSM), un caoutchouc d'éthylène-propylène-diène (EPDM), un caoutchouc d'éthylène-propylène (EPM), un caoutchouc fluoré (FKM), un caoutchouc d'épichlorhydrine (CO), un caoutchouc de copolymère d'épichlorhydrine (ECO), un terpolymère d'épichlorhydrine (GECO), un polydiméthylsiloxane (PDMS), un caoutchouc de copolymère d'oxyde de propylène (GPO), un caoutchouc de butadiène (BR), un caoutchouc de chloroprène (CR), un caoutchouc d'isobutène-isoprène (IIR), un caoutchouc bromobutyle (BIIR), un caoutchouc chlorobutyle (CIIR), un caoutchouc d'isoprène (IR), un caoutchouc naturel (NR), un caoutchouc de styrène-butadiène (SBR), un caoutchouc de fluorosilicone (FVMQ), un caoutchouc de méthyl-phényl-silicone (PMQ), un caoutchouc de méthyl-phényl-vinyl-silicone (PVMQ), un caoutchouc de méthyl-silicone (MQ), un caoutchouc de méthyl-vinyl-silicone (VMQ), des polyester-uréthanes (AU), des polyéther-uréthanes (EU) et des combinaisons correspondantes.

6. Transpondeur RFID actif (1) selon l'une quelconque des revendications 1 à 5, le cation du liquide ionique étant choisi dans le groupe constitué par des ions de métal alcalin, des ions de métal alcalino-terreux, imidazolium, vinylimidazolium, pyridinium, pyrrolidinium, guanidinium, pipéridinium, morpholinium, ammonium, phosphonium et des combinaisons correspondantes, et l'anion du liquide ionique étant choisi dans le groupe constitué par halogénures, perchlorate, tétrafluoroborate, trifluoroacétate, hexafluorophosphate, phosphinates, tosylate, triflate, bis(trifluorométhanesulfonyl)amide, bis(fluorosulfonyl)imide, bis(trifluorométhanesulfonyl)imide (TFSI), dicyanamide, tris(pentafluoroéthyl)trifluorophosphate, diméthylsulfate, difluoro(oxalato)borate (DFOB), bis(oxalato)borate (BOB), trifluorométhanesulfonate et des combinaisons correspondantes.

7. Transpondeur RFID actif (1) selon l'une quelconque des revendications 1 à 6, la première électrode étant gainée avec une enveloppe polymérique supplémentaire qui contient le métal de la première électrode sous forme de sel, et où la deuxième électrode étant gainée avec une enveloppe polymérique supplémentaire qui contient le métal de la deuxième électrode sous forme de sel.

8. Transpondeur RFID actif (1) selon la revendication 7, la première et la deuxième électrode étant à chaque fois gainée avec une enveloppe polymérique supplémentaire, les enveloppes polymériques pouvant être constituées du même polymère ou de polymères différents, et ces polymères étant des élastomères.

9. Transpondeur RFID actif (1) selon l'une quelconque des revendications 1 à 8, qui est flexible, le transpondeur RFID actif (1) étant flexible lorsque la matrice de caoutchouc (5) présente une déformation résiduelle d'au plus 50 % après 100 % d'extension.

10. Produit élastomérique, comprenant le transpondeur RFID actif (1) selon l'une quelconque des revendications 1 à 9.

11. Produit élastomérique selon la revendication 10, qui est un pneu, une semaine de chaussure, un tube ou une courroie d'entraînement.

12. Utilisation du transpondeur RFID actif (1) selon l'une quelconque des revendications 1 à 9 dans un produit élastomérique.
